Europäisches Patentamt

European Patent Office

Office européen des brevets

(19)

(11) Publication number: 0 340 884
A2

# (12) EUROPEAN PATENT APPLICATION

(21) Application number: 89300261.8

(51) Int. Cl.⁴: C04B 35/56 , C22C 29/02

(22) Date of filing: 12.01.89

(30) Priority: 02.05.88 JP 107647/88
12.07.88 JP 171804/88

(43) Date of publication of application:
08.11.89 Bulletin 89/45

(84) Designated Contracting States:
DE FR GB IT

(71) Applicant: UBE INDUSTRIES, LTD.
12-32, Nishihonmachi 1-chome
Ube-shi, Yamaguchi-ken 755(JP)

(72) Inventor: Nakagawa, Narihito
Ube Kenkyusho of Ube Ind. Ltd. 1978-5 Oaza
Kogushi
Ube-shi Yamaguchi-ken(JP)
Inventor: Ohsora, Yasumasa
Ube Kenkyusho of Ube Ind. Ltd. 1978-5 Oaza
Kogushi
Ube-shi Yamaguchi-ken(JP)
Inventor: Waku, Yoshiharu
Ube Kenkyusho of Ube Ind. Ltd. 1978-5 Oaza
Kogushi
Ube-shi Yamaguchi-ken(JP)
Inventor: Tokuse, Masahiro
Ube Kenkyusho of Ube Ind. Ltd. 1978-5 Oaza
Kogushi
Ube-shi Yamaguchi-ken(JP)

(74) Representative: Myerscough, Philip Boyd et al
J.A.Kemp & Co. 14, South Square Gray's Inn
London, WC1R 5EU(GB)

(54) Hybrid fibers, process for making them and process for making fiber-reinforced metals using them.

(57) A hybrid fiber comprising a bundle of heat-resistant continuous inorganic filaments and a heat-resistant inorganic filler in the form of a short fiber, whisker or powder supported on the surface of each filament, which is characterized in that at least one of the filaments and the filler is coated with a lubricant, and a process for making the aforesaid hybrid fiber comprising soaking a bundle of heat-resistant continuous inorganic filaments in a suspension of a heat-resistant inorganic filler, and drying the soaked filament bundle, characterized in that at least one of said bundle of filaments and the filler is previously coated with a lubricant, or that the suspension of the filler contains a lubricant dissolved or dispersed therein.

# HYBRID FIBERS, PROCESS FOR MAKING THEM AND PROCESS FOR MAKING FIBER-REINFORCED METALS

## BACKGROUND OF THE INVENTION

This invention relates to hybrid fibers for use in the manufacture of fiber-reinforced metals (FRM) and the like, processes for producing the hybrid fibers, and processes for making FRM.

In recent years, FRM was developed in which alumina fibers, silica fibers, silicon carbide fibers, boron fibers, silicon nitride fibers and carbon fibers are used as reinforcing fibers and aluminum, magnesium, titanium and copper, as a matrix metal. These FRM products are finding applications in many industrial fields as, for example, machine component parts and structural materials.

FRM is expected to show mechanical properties in accordance with the rule of mixture. Actually, however, products having the expected mechanical properties have not been obtained because of the contacting of the reinforcing fibers with one another and the non-uniform distribution of the reinforcing fibers in the matrix.

As one solution to these problems, JP-A 57-74117 (1982) discloses a process for continuous production of a fiber-reinforced composite, which comprises a first step of uniformly spreading a bundle of continuous filaments wound up on a roll and aligning the fiber bundle under a suitable tension on a base stand such as a roll, a second step of plasma-spraying a matrix material onto the fiber bundle on the base stand to produce prepreg sheets, a third step of stacking the required number of the prepreg sheets and heating them, or heating the prepreg sheets and then stacking the required number of the prepreg sheets, and a fourth step of continuously pressing the stacked prepreg sheets by a roller. In this process, spreading of the filament bundle on a base stand such as a rotating drum is effected by blowing compressed air against the filament bundle advancing toward the base stand. Accordingly, troubles such as the entanglement of the filaments among the filaments and their breakage are liable to occur, and to avoid these troubles, it is necessary to properly select the operating conditions such as the take-up speed of the filaments, the tension applied to the filaments, and the flow rate of compressed air. Furthermore, since this process combines the matrix metal and the reinforcing filament by plasma spraying, it does not offer a solution to the problems associated with other combining means such as a high-pressure coagulation casting method.

JP-A 61-266666 and 61-295346 (1986) disclose a fibrous material for use in the manufacture of FRM, composed of reinforcing filaments and adhering to their surfaces, fibers such as inorganic whiskers, metal whiskers, inorganic short fibers, ceramic powders, carbon powder and metal powders as one means for solving the above problems which is free from restrictions in the means of combining the matrix metal and the reinforcing filaments.

In the present specification and claims, the term "hybrid fiber" means a reinforced fibrous material of a structure such as the one described above.

If the hybrid fibers disclosed in JP-A 61-266666 (1986) is used as a fiber reinforcement, the adhesion between the filaments can be avoided, and uniform dispersing of the filaments achieved. Despite this, no expected improvement in mechanical properties can be obtained.

JP-A 61-91341 (1986) discloses a fiber-reinforced metal composite in which the matrix metal contains inorganic long fibers and at least one material selected from inorganic whiskers, metal whiskers and inorganic short fibers. According to the data given in working examples in this patent document, the strength in a direction at right angles to the orientation direction of the reinforcing fibers is improved, but the strength in the fiber orientation direction shows a tendency to decreasing.

## SUMMARY OF THE INVENTION

We have now found surprisingly that if a hybrid fiber comprising a reinforcing fiber and a filler at least one of which is coated with a lubricant is used as a reinforcement, the mechanical properties of the reinforced product in the fiber orientation direction can be markedly improved.

Specifically, the present invention relates to hybrid fibers, suitable for use as a reinforcement in, especially, FRM, comprising (1) a bundle of heat-resistant inorganic filaments of, for example, silicon carbide, silicon nitride, alumina, carbon or metals, each filament being at least partly covered with (2) a filler in the form of short fibers, whiskers or a powder of a heat-resistant inorganic material as mentioned above, which is characterized in that at least one of (1) and (2) is coated with a lubricant; to processes for producing the hybrid fibers and to processes for making FRM employing the hybrid fibers.

## BRIEF DESCRIPTION OF THE ACCOMPANYING DRAWINGS

Figure 1 is a schematic diagram showing one embodiment of the production of the hybrid fibers in accordance with this invention;

Figure 2 is a schematic diagram showing another embodiment of the production of the hybrid fibers in accordance with this invention;

Figure 3 is a schematic diagram showing part of the process of producing an FRM prepreg using the hybrid fibers of the invention as a reinforcement;

Figure 4 shows a perspective view of a fiber retaining jig used in one embodiment of producing FRM by pressure casting using the hybrid fibers of the invention, and a sectional view of a mold assembly showing casting stages using the jig; and

Figure 5 shows micrographs of the sections of FRM products, Figure 5A to 5C showing products obtained in accordance with this invention and Figures 5A' to 5C' showing comparative products.

DETAILED DESCRIPTION OF THE INVENTION

The hybrid fibers in accordance with this invention are prepared by employing an apparatus taught, for example, in Japanese Laid-Open Patent Publication No. 266666/1986.

The present invention will be described in detail with reference to the accompanying drawings.

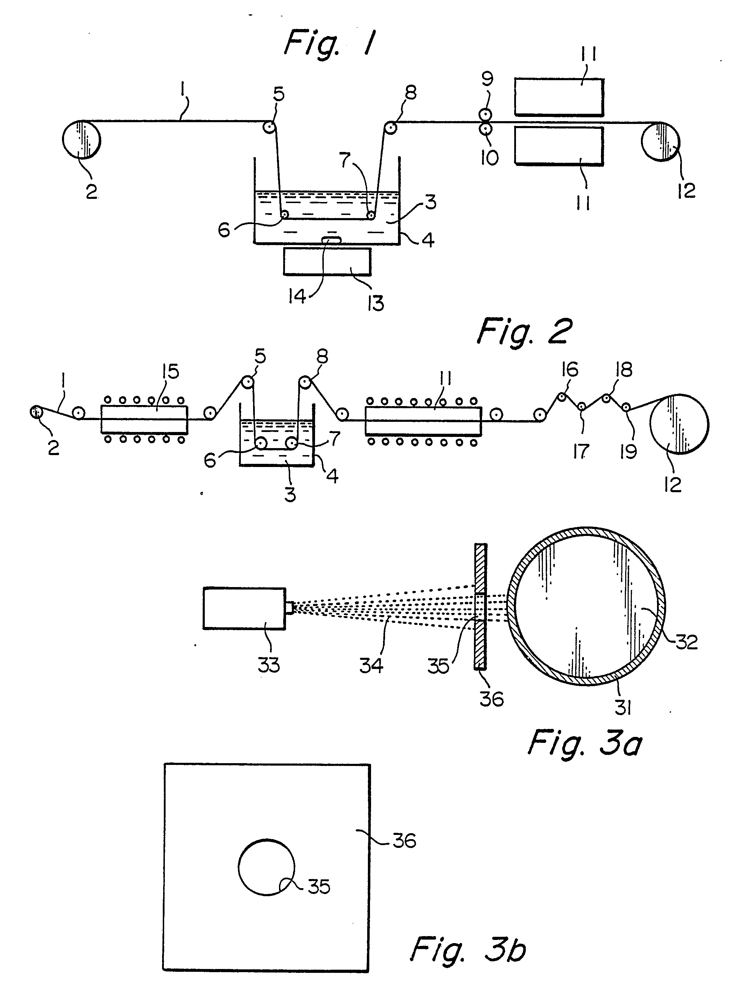

With reference to Figure 1, a bundle 1 of filaments is unwound from a bobbin 2 and passed through a bath 4 holding a suspension of a filler while being conducted by pulleys 5, 6, 7 and 8. During this time, the filler adheres to the surface of the filaments constituting the bundle 1. The bundle 1 is then squeezed by squeeze rolls 9 and 10 to remove the liquid contained in the bundle, and then dried in a dryer 11. The dried bundle is wound up on a bobbin 12. We have found that when this operation is continued, the filler adheres to the circumferential surfaces of the pulleys 6, 7 and 8 and the squeeze rolls 9 and 10 and becomes solidified, and that the solidified filler comes into frictional contact with the filaments or applies a force to the filaments diametrically thereof to cause damage or fracture to the filaments. The damage or fracture of the filaments is set off by the increase of the reinforcement effect produced by the uniform dispersing of the filaments. This is presumably the reason why the expected mechanical properties of the products are not improved.

The present invention can overcome the above problem by coating a lubricant on the surface of at least one of the filaments and the filler as a pretreatment, or by dissolving the lubricant in the treating bath 4 and coating the lubricant on the surface of the filaments and the filler during the treatment in the production of hybrid fibers by the process of this invention.

Examples of fibers which constitute the bundle of filaments include silicon carbide fibers, silicon nitride fibers, boron nitride fibers, aluminum nitride fibers, silica fibers, boron fibers, alumina fibers, carbon fibers, and inorganic fibers of Si-Ti (or Zr)-C-O type (TYRANO Fibers, a registered trademark for a product of Ube Industries, Ltd.) obtained by calcining polymetallocarbosilane. These fibers may be used singly or in combination.

The heat-resistant filler is composed of metals or ceramics. The metals may be, for example, Al, Ti, Cu, Ni, Co, Zr, Si, Cr, Zn, W and Mo, and the ceramics may be, for example, carbides, nitrides, borides, and oxides.

Powders, short fibers or whiskers of these metals or ceramics may be used singly or in combination as the filler.

The length, diameter and shape of the short fibers and whiskers and the particle diameter of the powders may be selected by considering the combination of the filaments with the filler. Desirably, the short fibres and whiskers have an average diameter 1/3000 to 1/5 of that of the filaments and an aspect ratio of from 50 to 1000. The fine particles desirably have an average diameter 1/5000 to 1/2 of that of the filaments.

There is no particular restriction on the concentration of the filler in the suspension, and may generally be about 0.3 to 300 % by weight, preferably 0.3 to 30 % by weight.

In the present invention, it is essential that prior to immersion of the filament bundle in the suspension of the filler, at least one of the filler and the filaments should be coated with the lubricant, or the lubricant, dissolved in the suspension.

The lubricant used in the coating may be one which reduces forces such as friction and compression and avoids damage or fracture of the filaments. As a result of coating the lubricant on the surface of at least one of the filaments and the filler, slippage between them is improved, and the damage or fracture of the filaments which are brittle and liable to break can be circumvented.

Examples of the lubricant include natural paraffin, microwax, synthetic paraffin waxes, polyethylene waxes, fluorocarbon oils, higher fatty acids, higher hydroxy-fatty acids, higher fatty acid amides, higher fatty acid bisamides, lower alcohol esters of higher fatty acids, polyhydric alcohol esters of higher fatty acids, Hoechst wax, natural wax and higher aliphatic alcohols. Of these, higher fatty acids such as stearic acid are especially preferred because they have a dispersing power on the filler.

The lubricant may be used singly or in combination with a binder, a plasticizer, etc.

The amount, or pick-up, of the lubricant is 0.5 to 200 parts by weight per 100 parts by weight of the material to be coated. If the amount of the lubricant is too small, no coating effect is obtained. If it is too large, no corresponding advantage is obtained, and it is not economical.

In a first embodiment of the process of this invention, hybrid fibers are produced by using a bundle of filaments and a filler at least one of which is coated with the lubricant, and immersing the filament bundle in a suspension of the filler.

Coating of the lubricant is carried out by a general coating method, for example, by immersing the filament bundle or the filler in a solution of the lubricant, or by spraying a solution of the lubricant.

The thickness of the coating layer may vary depending upon the object to be coated and the diameter or size of the object. Usually thicknesses of not more than 1 micrometer suffice.

To promote adhesion of the filler to the filaments, the above suspension preferably contains a binder such as polyethylene oxide and ethyl cellulose. The suitable concentration of the binder in the suspension is 0.1 to 0.2 % by weight.

In a second embodiment of the process of this invention, hybrid fibers are produced by immersing filaments in a medium in which the filler is suspended and the lubricant is dissolved.

The medium in which the filler is suspended and the lubricant is optionally dissolved may be, for example, an organic solvent such as an alcohol (methanol or ethanol), benzene, toluene and xylene. Water may be used as a solvent in which only the filler is suspended. In the first and second embodiments of the process of this invention, there is no particular restriction on the method by which the filaments are immersed in the suspension of the filler or the medium in which the filler is suspended and the lubricant is dissolved. All known immersing methods may be employed in this invention.

In still another embodiment of this invention, the bundle of filaments is withdrawn through a drying oven 11, and then spread by a series of fiber spreading and separating rolls 16 to 19, and then wound up on a take-off roll 12, as illustrated in Fig. 2. The series of fiber spreading rolls are set up immediately before a windup drum and flatten the filament bundle by working it up and down and varying the tension exerted on it. The number of the fiber spreading rollers may be selected depending upon the number of filaments bundled. If it is 200, two spreading rolls, for example, may be used. Three rolls may be used for 400 filaments bundled, and four rolls, for 800 filaments bundled. This permits fiber spreading and separating of a bundle of 200 filaments to a width of 2 to 3 mm, a bundle of 400 filaments to a width of 4 to 6 mm, and a bundle of 800 filaments to a width of 8 to 10 mm.

Sufficient spreading of the bundle of filaments as in the above embodiment ensures uniform dispersion of the filaments in a matrix and gives a product having very superior mechanical properties as shown in working examples given hereinafter.

FRM having much better mechanical properties than products of the prior art can be produced by plasma-spraying particles of a matrix metal on the hybrid fibers spread and helically wound in a single layer on the roll 12 to form a prepreg, cutting it open in the roll axis direction to form a flat sheet, stacking a plurality of such prepreg sheets, and hot pressing them. Such a prepreg may be continuously produced by plasma-spraying the matrix metal onto a web of the hybrid fibers spread and passed over the roll 12 without being taken up on the roll 12 as in the method disclosed in JP-A 62-27142 (1987).

In the prepreg sheet production, it is possible as shown in Figure 3 to provide a mask 36 having an aperture 35 between a hybrid fiber layer 31 on a roll 32 and a plasma gas 33 and to permit only that portion of matrix metal particles conveyed on a plasma stream which is located in the inner central areas and completely molten to pass through the aperture 35 and shut off metal particles which are located at the peripheral part of the plasma stream 34 and is not fully molten as a result of being cooled with air. By this technique, the filaments can be prevented from being broken or damaged by the impingement of the unmolten metal particles, and the advantage of this invention can be utilized to a greater degree.

In the prepreg production, it is advantageous also to preheat the filament layer by, for example, passing it through a preheating oven before plasma spraying of the matrix metal particles. As a result of preheating, the sprayed particles do not undergo abrupt cooling on the filament surface and therefore do not abruptly lose viscosity. Accordingly, the matrix layer becomes dense and the adhesion of the sprayed particles to the filament surface increases. Furthermore, since the flowability of the matrix metal particles is retained, the distribution of the matrix metal particles in the interstices of the filament increases. Since the filaments in the hybrid fibers of this invention are sufficiently separated from each other, the distribution of the matrix metal particles in the interstices of the filaments increases markedly by preheating.

The following Examples illustrate the present invention without any intention of limiting the scope of the invention thereby.

## EXAMPLE 1

Silicon carbide whiskers having a diameter of 0.2 to 0.5 micrometer and an average length of 50 to 200 micrometers were dispersed in an 8 % by weight toluene solution of stearic acid. The dispersion was filtered and dried to obtain silicon carbide whiskers coated with stearic acid. The amount of stearic acid coated, determined from a weight increase, was 3.5 % by weight. The coated silicon carbide whiskers (5 g) were put in a treating vessel holding a mixture of 200 ml of water and 1800 ml of ethanol, and suspended with stirring.

A bundle of 800 filaments (Si-Ti-C-O filaments; TYRANO Fibers; a registered trademark for a product of Ube Industries, Ltd.) having a diameter of 9 to 10 micrometers was unwound from a bobbin and simultaneously passed through the resulting suspension at a rate of 3 m/min.

The fiber bundle was immersed in the treating vessel by means of pulleys, pressed by press rollers 9 and 10, and wound up on a bobbin via a dryer 11. Napping was hardly observed in the filament bundle that left the dryer. There was no decrease in the strength of the filament, either. This led to the determination of the lubricating effect of stearic acid.

## COMPARATIVE EXAMPLE 1

Example 1 was repeated except that commercial silicon carbide whiskers were used without treatment. The filament bundle that left the dryer 11 was seen to contain a number of naps formed, and the filaments were broken.

When the above procedure was repeated except that the pressure rollers 9 and 10 were removed, the occurrence of naps was greatly reduced to a number of 1 to 2 per meter. The properties of the filaments, however, were inferior to those of the filaments in Example 1.

## EXAMPLE 2

A silicon carbide powder having an average particle diameter of 0.2 micrometer was dispersed in an 8 % by weight toluene solution of stearic acid. The solution was filtered, and dried to give a silicon carbide powder coated with stearic acid. The amount of stearic acid coated, determined from a weight increase, was 4.0 % by weight. Sixty grams of the silicon carbide powder was put in a treating vessel holding a mixture of 200 ml of water and 1800 ml of ethanol, and suspended with stirring. Polyethylene oxide as a binder was dissolved in the suspension to a concentration of 0.1 % by weight. Using the device shown in Figure 2, a bundle of 800 filaments (Si-Ti-C-O filaments; TYRANO Fibers; a registered trademark for a product of Ube Industries, Ltd.) having a diameter of 9 to 10 micrometers was unwound from a bobbin 2 and passed through an electrical furnace 15 kept at 500 °C to remove the bundling agent. The filament bundle 1 was then passed through the suspension 3 held in the treating tank 4 while being guided by guide rolls 5, 6, 7 and 8 at a rate of 3 m/min. to apply the silicon carbide powder to the filament surface. The filament bundle was then passed through a drying oven 11.

The filament bundle was gradually spread and separated into the individual filaments by bringing it into contact successively with fiber spreading rollers 16, 17, 18 and 19, and wound up on a drum 12. Hardly any nap was seen to occur in the filaments wound up on the drum 12.

The filaments after spreading and separation had a tensile strength of 309 kg/mm$^2$, and the strength of the filaments hardly decreased during the immersing treatment and the fiber spreading and separating treatment.

## COMPARATIVE EXAMPLE 2

Example 2 was repeated except that a commercial silicon carbide powder was used without treatment. The filament bundle wound up on the drum 12 was seen to contain a number of naps, and the filaments were broken.

## EXAMPLE 3

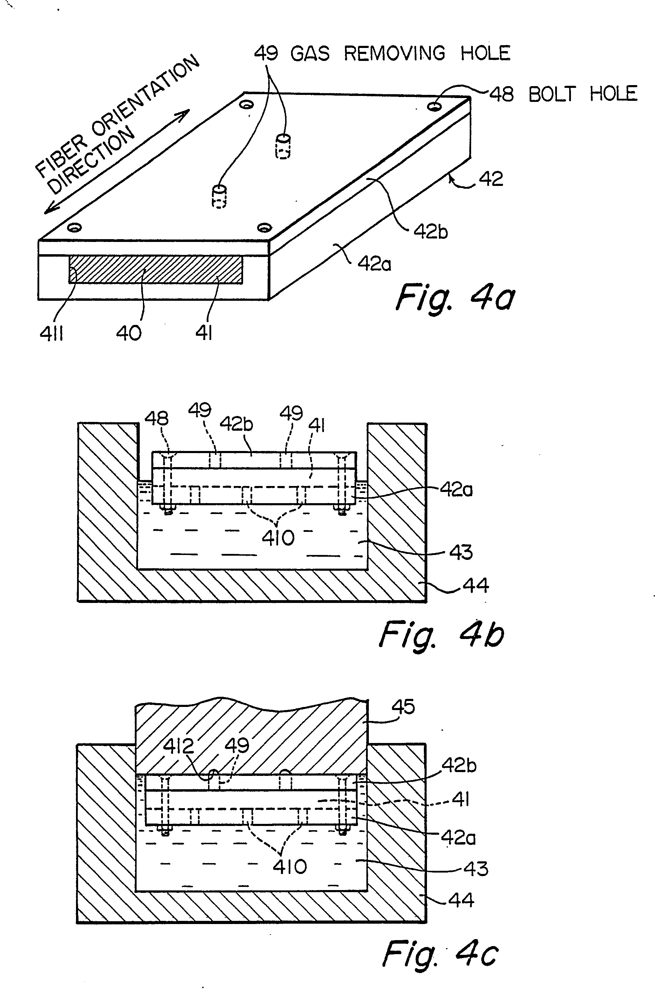

FRM was prepared from the hybrid fibers spread and separated in Example 2 by the following procedure using a fiber retaining jig 42 shown in Figure 4a. The jig 42 was made of graphite and consisted of a body 42a and a lid 42b. The body 42a had a longitudinally extending channel 40 with a length of 15 cm, a width of 8 cm and a depth of 1 cm.

The hybrid fibers 11 cut to a fixed length were filled uniformly into the channel 40 so that the fiber volume was 60 %. The lid 42b was fixed to the body 42a by bolts and nuts. The fiber retaining jig 42 having the hybrid fibers held therein was heated to 650 °C in the air. As shown in Figure 4b, molten aluminum (JIS standards 1070) at 750 °C was poured into a mold 44, and the retaining jig 42 was set in the mold so that the lid 42b having a gas removing hole 49 faced upward. Then, as shown in Figure 4c, the molten aluminum was pressurized to 1000 kg/cm² by means s of a plunger 45, and the molten aluminum was forced into the jig 42 from openings on both sides and aluminum injection holes 410 provided in the underside of the body 42a, and coagulated to produce a fiber-reinforced composite material. The composite material was then taken out, and the texture of its section was observed. Casting defects such as voids and disturbance in fiber orientation were not at all observed. The flexural strength of the composite material in the fiber orientation direction was as high as 180 kg/mm².

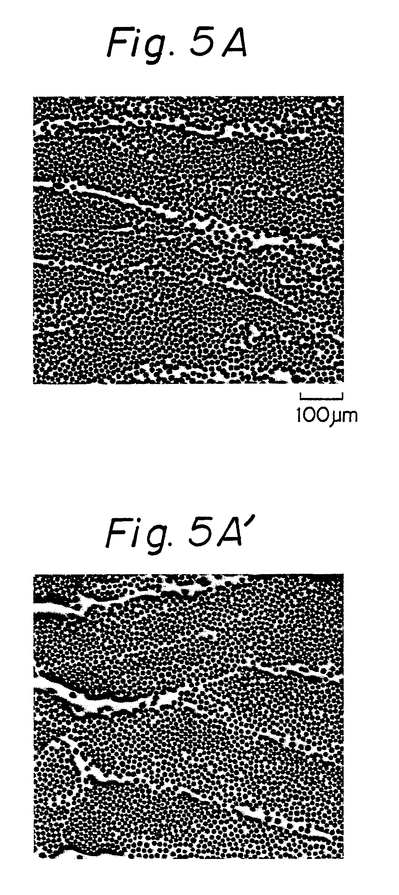

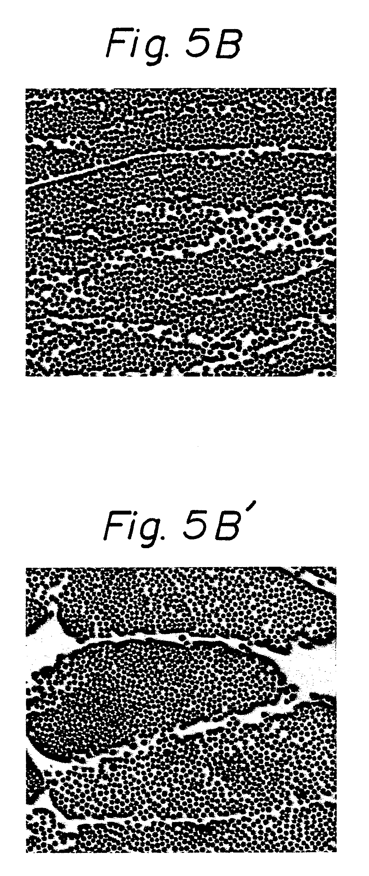

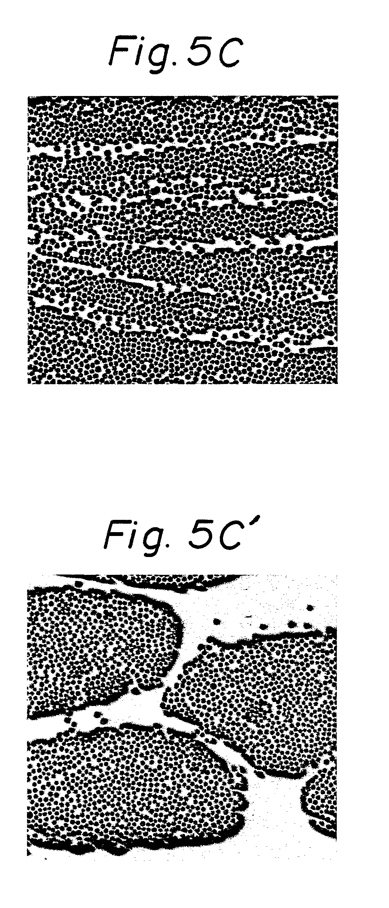

Figures 5A and 5C are sectional views of FRM in the direction of the filaments and in a direction at right angle thereto. Figure 5A shows the state of filament distribution in its upper layer. Figure 5B shows the state of filament distribution in its intermediate layer, and Figure 5C shows the state of filament distribution in its lower layer. These micrographs show that in the FRM obtained by this invention, the reinforcing fibers are uniformly dispersed throughout.

COMPARATIVE EXAMPLE 3

Example 3 was repeated except that the silicon carbide powder was not coated, and the filaments were not spread and separated by fiber spreading rolls. The resulting fiber-reinforced metal had a flexural strength of 125 kg/mm².

Figures 5A′ to 5C′ are micrographs, similar to Example 3, of the resulting FRM.

EXAMPLE 4

An aluminum powder for plasma spraying was sprayed to a fiber volume of 30 % onto the hybrid fibers (fiber width 200 mm) wound up on the drum 12 obtained in Example 2 to form a prepreg. At this time, the plasma spray nozzle was provided 140 mm apart from the fiber surface, and the moving speeds of the nozzle and the fibers were determined depending upon the total width of the hybrid fibers.

The prepreg sheet obtained had a thickness of 130 to 150 micrometers.

Sheets each measuring 90 mm in the fiber orientation direction and 60 mm in a direction perpendicular to the fibers were cut out from the resulting prepreg sheet. Twenty such sheets were stacked to form a one-direction laminate, and the laminated structure was set in a mold.

The mold was put in a hot press device, and the inside of the receptacle was kept at $5 \times 10^{-5}$ and heated to 550 °C. By a hydraulic press, the mold was pressed for 15 minutes under a pressure of 400 kg/mm² to produce a fiber-reinforced metal having a thickness of 2.0 mm.

The resulting fiber-reinforced metal had a flexural strength in the fiber orientation direction of 100 kg/mm².

COMPARATIVE EXAMPLE 4

Example 4 was repeated except that the silicon carbide powder was not coated with stearic acid and the fibers were not treated with fiber spreading rolls.

The resulting fiber-reinforced metal had a flexural strength in the fiber orientation direction of 40 kg/mm².

Claims

1. A hybrid fiber comprising a bundle of heat-resistant continuous inorganic filaments and a heat-resistant inorganic filler in the form of a short fiber, whisker or powder supported on the surface of each filament, which is characterized in that at least one of the filaments and the filler is coated with a lubricant.

2. A hybrid fiber according to claim 1 in which the amount of lubricant is 0.5 to 20.0 % by weight based on the total weight of the filaments and filler.

3. A hybrid fiber according to claim 1 or 2 in which the lubricant is selected from natural paraffin, microwax, synthetic paraffin waxes, polyethylene waxes, fluorocarbon oils, higher fatty acids, higher hydroxy-fatty acids, higher fatty acid amides, higher fatty acid bisamides, lower alcohol esters of higher fatty acids, polyhydric alcohol esters of higher fatty acids, Hoechst wax, natural wax and higher aliphatic alcohols.

4. A hybrid fiber according to claim 1, 2 or 3 in which the lubricant is a higher fatty acid.

5. A hybrid fiber according to claim 4 in which the higher fatty acid is stearic acid.

6. A process for making hybrid fibers as claimed in any one of the preceding claims comprising soaking a bundle of heat-resistant continuous inorganic filaments in a suspension of a heat-resistant inorganic filler, and drying the soaked filament bundle, characterized in that at least one of said bundle of filaments and the filler has previously been coated with a lubricant or in that the suspension of the filler contains a lubricant dissolved or dispersed therein.

7. A process according to claim 6 in which the lubricant is present in the form of a film coated on the filaments and/or the filler in an amount of 0.5 to 20 % by weight based on the total weight of the filaments and filler.

8. A process according to claim 6 or 7 in which the dried hybrid fibers are spread and separated.

9. Use of hybrid fibers as claimed in any one of claims 1 to 5 as fibrous reinforcement for metallic matrices.

10. Use according to claim 10 in which the hybrid fibers are spread and separated or extracted before being used to ensure uniform distribution in the metallic matrices.

Fig. 1

Fig. 2

Fig. 3a

Fig. 3b

Fig. 4a

Fig. 4b

Fig. 4c

## Fig. 5A

100μm

## Fig. 5A′

## Fig. 5B

## Fig. 5B'

*Fig. 5C*

*Fig. 5C'*